(19) Europäisches Patentamt

European Patent Office

Office européen des brevets

(11) **EP 1 171 497 B1**

(12) **EUROPÄISCHE PATENTSCHRIFT**

(45) Veröffentlichungstag und Bekanntmachung des Hinweises auf die Patenterteilung:
**11.10.2006 Patentblatt 2006/41**

(21) Anmeldenummer: **00912636.8**

(22) Anmeldetag: **23.03.2000**

(51) Int Cl.:
*C08F 297/04* *(2006.01)*

(86) Internationale Anmeldenummer:
**PCT/EP2000/002568**

(87) Internationale Veröffentlichungsnummer:
**WO 2000/058380 (05.10.2000 Gazette 2000/40)**

(54) **GLASKLARES, SCHLAGZÄHES POLYSTYROL AUF BASIS VON STYROL-BUTADIEN-BLOCKCOPOLYMEREN**

TRANSPARENT, IMPACT-RESISTANT POLYSTYRENE ON A STYRENE-BUTADIENE BLOCK COPOLYMER BASIS

POLYSTYRENE TRANSPARENT ET RESISTANT AUX CHOCS A BASE DE COPOLYMERES BLOCS STYRENE-BUTADIENE

(84) Benannte Vertragsstaaten:
**AT BE CH CY DE DK ES FI FR GB GR IE IT LI LU MC NL PT SE**

(30) Priorität: **27.03.1999 DE 19914075**
**23.12.1999 US 471288**

(43) Veröffentlichungstag der Anmeldung:
**16.01.2002 Patentblatt 2002/03**

(60) Teilanmeldung:
**06111958.2 / 1 690 879**

(73) Patentinhaber: **BASF Aktiengesellschaft**
**67056 Ludwigshafen (DE)**

(72) Erfinder:
• **KNOLL, Konrad**
**D-67069 Ludwigshafen (DE)**

• **FISCHER, Wolfgang**
**D-69190 Walldorf (DE)**
• **GAUSEPOHL, Hermann**
**D-67112 Mutterstadt (DE)**
• **KOCH, Jürgen**
**D-67056 Ludwigshafen (DE)**
• **WÜNSCH, Josef**
**D-67105 Schifferstadt (DE)**
• **NAEGELE, Paul**
**D-67166 Otterstadt (DE)**

(56) Entgegenhaltungen:
EP-A- 0 842 962    DE-A- 19 615 533
DE-A- 19 715 035    GB-A- 1 556 234
US-A- 3 632 682    US-A- 4 603 155

**Beschreibung**

Die Erfindung betrifft Blockcopolymere, enthaltend mindestens zwei Hartblöcke $S_1$ und $S_2$ aus vinylaromatischen Monomeren und mindestens einen dazwischenliegenden, statistischen Weichblock B/S aus vinylaromatischen Monomeren und Dienen, wobei der Anteil der Hartblöcke über 40 Gew.-%, bezogen auf das gesamte Blockcopolymer, beträgt.

Des weiteren betrifft die Erfindung ein Verfahren zur Herstellung der Blockcopolymeren sowie deren Verwendung.

Die US 4 939 208 beschreibt lineare, transparente Styrol-Butadien-Blockcopolymere der Struktur $S_1$-$B_1$-B/S-$S_2$. Die Polymerisation von Styrol und Butadien in Gegenwart einer Lewis-Base, insbesondere Tetrahydrofuran (Randomizer), führt zu dem statistischen Copolymerblock B/S. Die Länge des B/S-Segments hängt von der Menge an Lewis-Base ab.

Polymodale gekoppelte Styrol-Butadien-Blockcopolymere werden in der EP-A 0 654 488 beschrieben. Die Blöcke B/S enthalten einen Styrolgradienten (Tapered-Block). Durch Zusatz von polaren Verbindungen, wie Tetrahydrofuran als Randomizer kann der statistische Anteil in den Blöcken erhöht werden.

Die Polymerisation von Styrol und Butadien in Gegenwart von geringen Mengen Tetrahydrofuran als Randomizer führt zu einem hohen Anteil an Homo-Polybutadienblöcken und einem verschmierten Übergang zum Polystyrolblock. Erhöht man die Tetrahydrofuranmenge, so gelangt man zwar zu mehr oder weniger statistischen Butadien-Styrol-Copolymerblöcken, allerdings wird hierbei gleichzeitig der relative Anteil an 1,2-Verknüpfungen des Polydiens (1,2-Vinylgehalt) stark erhöht. Der hohe 1,2-Vinylgehalt beeinträchtigt aber die Thermostabilität des entsprechenden Blockcopolymeren und erhöht die Glasübergangstemperatur.

Die DE-A 19615533 beschreibt ein elastomeres Styrol-Butadien-Blockcopolymer mit einem relativen Anteil an 1,2-Verknüpfungen des Polydiens unterhalb von 15 % und einem Anteil der Hartphase von 1 bis 40 Vol.-%. Die Polymerisation der Weichphase wird in Gegenwart eines löslichen Kaliumsalzes vorgenommen.

Die Verwendung von Kaliumalkoholaten oder Kaliumhydroxid und lithiumorganischen Polymerisationsinitiatoren wird in US 3,767,632, US 3,872,177, US 3,944,528 und von C.W. Wolfford et al. in J. Polym. Sci, Part. A-1, Vol. 7 (1969), S. 461-469, beschrieben.

Die statistische Copolymerisation von Styrol und Butadien im Cyclohexan in Gegenwart von löslichen Kaliumsalzen wird von S.D. Smith, A. Ashraf in Polymer Preprints 34 (2), 672 (1993) und 35 (2), 466 (1994) beschrieben. Als lösliche Kaliumsalze werden Kalium-2,3-dimethyl-3-pentanolat und Kalium-3-ethyl-3-pentanolat erwähnt.

Aufgabe der vorliegenden Erfindung war es daher, ein glasklares, schlagzähes Polystyrol mit einem ausgewogenen Zäh-/SteifigkeitsVerhältnis bereitzustellen, das die vorgenannten Nachteile nicht aufweist. Insbesondere sollte das schlagzähe Polystyrol eine hohe intrinsische thermische Stabilität und reduzierte Tixotropie aufweisen. Die Verträglichkeit mit Styrolpolymeren sollte ebenfalls gegeben sein, um transparente Mischungen zu erhalten. Die Effizienz zur Schlagzähmodifizierung von Styrolpolymeren, insbesondere Standardpolystyrol, sollte erhöht werden.

Demgemäß wurden Blockcopolymere, enthaltend mindestens zwei Hartblöcke $S_1$ und $S_2$ aus vinylaromatischen Monomeren und mindestens einen dazwischenliegenden, statistischen Weichblock B/S aus vinylaromatischen Monomeren und Dienen, wobei der Anteil der Hartblöcke über 40 Gew.-%, bezogen auf das gesamte Blockcopolymer beträgt, gefunden. Der 1,2-Vinylgehalt im Weichblock B/S liegt unter 20 %,

Als Vinylgehalt wird der relative Anteil an 1,2-Verknüpfungen der Dieneinheiten, bezogen auf die Summe der 1,2-, 1,4-cis und 1,4-trans-Verknüpfungen verstanden. Bevorzugt liegt der 1,2-Vinylgehalt der Weichblöcke im Bereich von 10 - 20 %, insbesondere 12 - 16 %.

Als vinylaromatische Monomere können sowohl für die Hartblöcke $S_1$ und $S_2$ als auch für die Weichblöcke B/S Styrol, $\alpha$-Methylstyrol, p-Methylstyrol, Ethylstyrol, tert.-Butylstyrol, Vinyltoluol oder Mischungen davon verwendet werden. Bevorzugt wird Styrol verwendet.

Als Diene für den Weichblock B/S werden bevorzugt Butadien, Isopren, 2,3-Dimethylbutadien, 1,3-Pentadien, 1,3-Hexadiene oder Piperylen oder Mischungen davon verwendet. Besonders bevorzugt wird 1,3-Butadien verwendet.

Bevorzugt besteht das Blockcopolymere ausschließlich aus Hartblöcken $S_1$ und $S_2$ sowie mindestens einem statistischen Weichblock B/S und enthält keine Homopolydienblöcke B. Die Blockcopolymere enthalten außenliegende Hartblöcke $S_1$ und $S_2$ mit unterschiedlicher Blocklänge. Das Molekulargewicht von $S_1$ liegt im Bereich von 5000 bis 30000 g/mol, insbesondere im Bereich von 10000 bis 20000 g/mol. Das Molekulargewicht von $S_2$ beträgt über 35000 g/mol. Bevorzugte Molekulargewichte von $S_2$ liegen im Bereich von 50000 bis 150000 g/mol.

Zwischen den Hartblöcken $S_1$ und $S_2$ können sich auch mehrere, statistische Weichblöcke B/S befinden. Bevorzugt werden mindestens 2 statistische Weichblöcke $(B/S)_1$ und $(B/S)_2$ mit unterschiedlichen Anteilen an vinylaromatischen Monomeren und damit unterschiedlichen Glasübergangstemperaturen.

Die Blockcopolymeren können eine lineare oder eine sternförmige Struktur aufweisen.

Als lineares Blockcopolymer wird bevorzugt eine Struktur $S_1$-$(B/S)_1$-$(B/S)_2$-$S_2$ eingesetzt. Das molare Verhältnis von vinylaromatischem Monomer zu Dien S/B liegt im Block $(B/S)_1$ bevorzugt unter 0,25 und im Block $(B/S)_2$ bevorzugt

im Bereich von 0,5 bis 2.

Als sternförmige Blockcopolymere werden bevorzugt solche mit einer Struktur aus mindestens einem Sternast aus der Blockfolge $S_1$-(B/S) und einem Sternast der Blockfolge $S_2$-(B/S) oder solche mit mindestens einem Sternast der Blockfolge $S_1$-(B/S)-$S_3$ und mindestens einem Sternast der Blockfolge $S_2$-(B/S)-$S_3$. $S_3$ steht hierbei für einen weiteren Hartblock aus den genannten vinylaromatischen Monomeren.

Besonders bevorzugt werden sternförmige Blockcopolymere mit Strukturen, die mindestens einen Sternast mit der Blockfolge $S_1$-(B/S)$_1$-(B/S)$_2$ und mindestens einen Sternast mit der Blockfolge $S_2$-(B/S)$_1$-(B/S)$_2$ oder die mindestens einen Sternast mit der Blockfolge $S_1$-(B/S)$_1$-(B/S)$_{2\text{-}S3}$ und mindestens einen Sternast mit der Blockfolge $S_2$-(B/S)$_1$-(B/S)$_2$-$S_3$ aufweisen. Das molare Verhältnis von vinylaromatischem Monomer zu Dien S/B liegt im äußeren Block (B/S)$_1$ bevorzugt im Bereich von 0,5 bis 2 und im inneren Block (B/S)$_2$ bevorzugt unterhalb 0,5. Durch den höheren Gehalt an vinylaromatischen Monomeren im äußeren statistischen Block (B/S)$_1$ wird das Blockcopolymer bei unverändertem Gesamtbutadiengehalt duktiler, was sich insbesondere in Abmischungen mit StandardPolystyrol vorteilhaft erweist.

Die sternförmigen Blockcopolymeren mit dem zusätzlichen, inneren Block $S_3$ haben bei vergleichbarer Duktilität eine höhere Steifigkeit. Der Block $S_3$ wirkt somit wie ein Füllstoff in der Weichphase, ohne das Verhältnis von Hartphase zu Weichphase zu verändern. Das Molekulargewicht der Blöcke $S_3$ ist in der Regel wesentlich niedriger als das der Blöcke $S_1$ und $S_2$. Bevorzugt liegt das Molekulargewicht von $S_3$ im Bereich von 500 bis 5000 g/mol.

Die erfindungsgemäßen Blockcopolymere können beispielsweise durch sequentielle anionische Polymerisation gebildet werden, wobei mindestens die Polymerisation der Weichblöcke (B/S) in Gegenwart eines Radomizers erfolgt. Die Gegenwart von Randomizern bewirkt die statistische Verteilung der Diene und vinylaromatischen Einheiten im Weichblock (B/S). Als Randomizer eignen sich Donorlösungsmittel, wie Ether, beispielsweise Tetrahydrofuran, oder tert.-Amine oder lösliche Kaliumsalze. Für eine ideale statistische Verteilung werden im Falle von Tetrahydrofuran Mengen von in der Regel über 0,25 Volumenprozent, bezogen auf das Lösungsmittel, verwendet. Bei geringen Konzentrationen erhält man sogenannte "tapered" Blöcke mit einem Gradienten in der Zusammensetzung der Comonomeren.

Bei den angegebenen höheren Mengen an Tetrahydrofuran erhöht sich gleichzeitig der relative Anteil der 1,2-Verknüpfungen der Dieneinheiten auf etwa 30 bis 35 %.

Bei Verwendung von Kaliumsalzen erhöht sich der 1,2-Vinylgehalt in den Weichblöcken dagegen nur unwesentlich. Die erhaltenen Blockcopolymeren sind daher weniger vernetzungsanfällig und weisen bei gleichem Butadiengehalt eine niedrigere Glasübergangstemperatur auf.

Das Kaliumsalz wird im allgemeinen in Bezug auf den anionischen Polymerisationsinitiator im molaren Unterschuß eingesetzt. Bevorzugt wählt man ein molares Verhältnis von anionischem Polymerisationsinitiator zu Kaliumsalz im Bereich von 10:1 bis 100:1, besonders bevorzugt im Bereich von 30:1 bis 70:1. Das verwendete Kaliumsalz sollte im allgemeinen in Reaktionsmedium löslich sein. Geeignete Kaliumsalze sind beispielsweise Kaliumalkoholate, insbesondere ein Kaliumalkoholat eines tertiären Alkohols mit mindestens 5 Kohlenstoffatomen. Besonders bevorzugt werden Kalium-2,2-dimethyl-1-propanolat, Kalium-2-methyl-butanolat (Kaliumtertiäramylat), Kalium-2,3-dimethyl-3-pentanolat, Kalium-2-methyl-hexanolat, Kalium-3,7-dimethyl-3-octanolat (Kaliumtetrahydrolinaloolat) oder Kalium-3-ethyl-3-pentanolat eingesetzt. Die Kaliumalkoholate sind beispielsweise durch Umsetzung von elementarem Kalium, Kalium/Natrium-Legierung oder Kaliumalkylaten und den entsprechenden Alkoholen in inertem Lösungsmittel zugänglich.

Zweckmäßigerweise gibt man das Kaliumsalz erst nach der Zugabe des anionischen Polymerisationsinitiators der Reaktionsmischung zu. Auf diese Weise kann eine Hydrolyse des Kaliumsalzes durch Spuren an protischen Verunreinigungen vermieden werden. Besonders bevorzugt wird das Kaliumsalz kurz vor der Polymerisation des statistischen Weichblockes B/S zugegeben.

Als anionischer Polymerisationsinitiator können die üblichen mono-, bi- oder multifunktionellen Alkalimetallalkyle, -aryle oder -aralkyle verwendet werden. Zweckmäßigerweise werden lithiumorganische Verbindungen eingesetzt wie Ethyl-, Propyl-, Isopropyl-, n-Butyl-, sek.-Butyl-, tert.-Butyl-, Phenyl-, Diphenylhexyl-, Hexamethyldi-, Butadienyl-, Isoprenyl-, Polystyryllithium, 1,4-Dilithiobutan, 1,4-Dilithio-2-buten oder 1,4-Dilithiobenzol. Die benötigte Menge an Polymerisationsinitiator richtet sich nach dem gewünschten Molekulargewicht. In der Regel liegt sie im Bereich von 0,001 bis 5 mol-%, bezogen auf die Gesamtmonomermenge.

Bei der Herstellung der unsymmetrischen, sternförmigen Blockcopolymeren wird mindestens zweimal ein Polymerisationsinitiator zugegeben. Bevorzugt wird gleichzeitig das vinylaromatische Monomer $S_a$ und der Initiator $I_1$ im Reaktor zugegeben und vollständig polymerisiert und anschließend nochmals gleichzeitig vinylaromatische Monomer $S_b$ und Initiator $I_2$. Auf diese Weise erhält man nebeneinander zwei "lebende" Polymerketten $S_a$-$S_b$-$I_1$ und $S_b$-$I_2$, an die anschließend durch gemeinsame Zugabe von vinylaromatischem Monomer und Diene der Block (B/S)$_1$ und gegebenenfalls durch erneute gemeinsame Zugabe von vinylaromatischem Monomer und Diene der Block (B/S)$_2$ sowie gegebenenfalls durch weitere Zugabe von vinylaromatischem Monomer $S_c$ der Block $S_3$ polymerisiert. Das Verhältnis von Initiator $I_1$ zu Initiator $I_2$ bestimmt den relativen Anteil der jeweiligen Sternäste, die sich nach der Kopplung statistisch verteilt in den einzelnen sternförmigen Blockcopolymeren finden. Der Block $S_1$ wird hierbei aus den Dosierungen der

3

vinylaromatischen Monomeren $S_a$ und $S_b$ gebildet, der Block $S_2$ und $S_3$ alleine durch die Dosierung $S_b$ bzw. $S_c$. Das molare Initiatorverhältnis $I_2/I_1$ liegt bevorzugt im Bereich von 4/1 bis 1/1, besonders bevorzugt im Bereich von 3,5/1 bis 1,5/1.

Die Polymerisation kann in Gegenwart eines Lösungsmittels vorgenommen werden. Als Lösungsmittel eignen sich die für anionische Polymerisation üblichen aliphatischen, cycloaliphatischen oder aromatischen Kohlenwasserstoffe mit 4 bis 12 Kohlenstoffatomen wie Pentan, Hexan, Heptan, Cyclohexan, Methylcyclohexan, IsoOctan, Benzol, Alkylbenzole, wie Toluol, Xylol, Ethylbenzol oder Decalin oder geeignete Gemische. Bevorzugt werden Cyclohexan und Methylcyclohexan verwendet.

In Gegenwart von retardierend auf die Polymerisationsgeschwindigkeit wirkenden Metallorganylen, wie Magnesium-, Aluminium- oder Zinkalkylen, kann die Polymerisation auch lösungsmittelfrei durchgeführt werden.

Nach Beendigung der Polymerisation können die lebenden Polymerketten mit einem Kettenabbruchmittel verschlossen werden. Als Kettenabbruchmittel eignen sich protonaktive Substanzen oder Lewis-Säuren, wie beispielsweise Wasser, Alkohole, aliphatische oder aromatische Carbonsäuren sowie anorganische Säuren wie Kohlensäure oder Borsäure.

Anstelle der Zugabe eines Kettenabbruchmittels nach Beendigung der Polymerisation können die lebenden Polymerketten auch durch mehrfunktionelle Kopplungsmittel, wie polyfunktionelle Aldehyde, Ketone, Ester, Anhydride oder Epoxide sternförmig verknüpft werden. Hierbei können durch Kopplung gleicher oder verschiedener Blöcke symmetrische und unsymmetrische Sternblockcopolymere erhalten werden, deren Arme die oben genannten Blockstrukturen aufweisen können. Unsymmetrische Sternblockcopolymere sind beispielsweise durch getrennte Herstellung der einzelnen Sternäste bzw. durch mehrfache Initiierung, beispielsweise zweifache Initiierung mit Aufteilung des Initiators im Verhältnis 2/1 bis 10/1, zugänglich.

Die erfindungsgemäßen Blockcopolymeren zeigen das Verhalten von glasklarem, schlagzähem Polystyrol mit einem ausgewogenen Zäh-/Steifigkeitsverhältnis. Aufgrund des statistischen Weichblockes B/S sind die erfindungsgemäßen Blockcopolymeren bei gleichem Diengehalt thermostabiler und duktiler als entsprechende Blockcopolymere mit einem "tapered" B/S-Block. Eine besonders hohe intrinsische thermische Stabilität weisen die in Gegenwart eines Kaliumsalzes hergestellten Blockcopolymeren mit niedrigem 1,2-Vinylgehalt auf.

Die erfindungsgemäßen Blockcopolymeren weisen auch eine gute Verträglichkeit mit weiteren Styrolpolymeren auf und können daher zu transparenten Polymermischungen verarbeitet werden.

Die erfindungsgemäßen Blockcopolymeren oder Polymermischungen können zur Herstellung von Fasern, Folien und Formkörpern verwendet werden.

Beispiele

Meßmethoden

Die Schmelze-Volumenrate MVR (200°C/5 kg) wurde gemäß ISO 1133 bestimmt.

Die Probekörper für die mechanischen Prüfungen wurden bei 220°C Massetemperatur und 45°C Formtemperatur gespritzt. E-Modul, Streckspannung, Bruchspannung, Streckdehnung und Bruchdehnung wurden im Zugversuch nach ISO 527 mit Zugstäben gemäß ISO 3167 ermittelt.

Die Vicat-Erweichungstemperaturen VST/A und VST/B wurden nach der Prüfvorschrift DIN ISO 306 bestimmt.

Die Molekulargewichte wurden mittels Gelpermeationschromatographie (GPC) an Polystyrol-Gel-Säulen vom Typ Mixed B der Fa. Polymer Labs. mit monodispersen Polystyrolstandards bei Raumtemperatur und Tetrahydrofuran als Eluens bestimmt.

Der 1,2-Vinylgehalt wurde mittels FT-IR-Spektroskopie ermittelt.

Beispiel 1 bis 5

Lineare Styrol-Butadien-Blockcopolymere der Struktur $S_1$-(B/S)$_1$-(B/S)$_2$-$S_2$ wurden durch sequentielle anionische Polymerisation von Styrol und Butadien in Cylcohexan als Lösungsmittel bei 60 - 90°C erhalten. Hierzu wurde in einem 1500-1-Rührreaktor 598 1 Cylohexan und 1,235 1 einer 1,5 molaren sec-Butyllithium-Lösung (n-Hexan/Cyclohexan) vorgelegt und die zur Herstellung des Blocks $S_1$ benötigte Menge Styrol zudosiert. Nachdem alles Styrol verbraucht worden war, wurde Kaliumtetrahydrolinaloolat als Randomizer zugegeben und die Blöcke (B/S)$_1$ und (B/S)$_2$ durch Zugabe der aus Tabelle 1 ersichtlichen Mischungen aus Styrol und Butadien angefügt. Abschließend wurde der Styrolblock $S_2$ polymerisiert und mit Isopropanol abgebrochen. Die Blockcopolymeren hatten eine Molmasse $M_n$ von 120.000 g/mol. Die molaren Verhältnisse von Initiator/Randomizer (Li/K) und die Anteile an Styrol und Butadien in den jeweiligen Blöcken, bezogen auf das Gesamtpolymer, sind in Tabelle 1 zusammengestellt. Für die Beispiele 1 - 4 wurden insgesamt 156 kg Styrol und 44 kg Butadien bzw. 152 kg Styrol und 48 kg Butadien für Beispiel 5 eingesetzt.

Tabelle 1: Blockaufbau (Anteile in Gew.-%) und Randomizeranteil (Molverhältnis Li/K) der linearen Styrol-Butadien-Blockcopolymeren

| Block | $S_1$ | $(B/S)_1$ | $(B/S)_1$ | $(B/S)_2$ | $(B/S)_2$ | $S_2$ | Li/K | 1,2-Vinyl |
|-------|-------|-----------|-----------|-----------|-----------|-------|------|-----------|
| Beisp. | Styrol | Butadien | Styrol | Butadien | Styrol | Styrol | | [%] |
| 1 | 18,0 | 14,7 | 8,3 | 7,3 | 15,7 | 36 | 60/1 | 16,2 |
| 2 | 18,0 | 14,7 | 8,3 | 7,3 | 15,7 | 36 | 80/1 | 14,5 |
| 3 | 18,0 | 14,7 | 8,3 | 7,3 | 15,7 | 36 | 40/1 | 17,9 |
| 4 | 9,0 | 14,7 | 8,3 | 7,3 | 15,7 | 45 | 60/1 | 15,2 |
| 5 | 9,0 | 14,7 | 8,3 | 9,3 | 13,7 | 45 | 60/1 | 15,8 |

Tabelle 2: Mechanische Daten (Prüfkörper aus Preßplatte ausgestanzt) der der linearen Styrol-Butadien-Blockcopolymeren aus Beispiel 1 bis 5

| | E-Modul | Streckspannung | Reißspannung | Reißdehnung | Shore-Härte D | Vicat-B-Temperatur |
|-------|---------|----------------|--------------|-------------|---------------|---------------------|
| Beispiel | [MPa] | [MPa] | [MPa] | [%] | [°] | [°C] |
| 1 | 500 | 12,9 | 33,3 | 350 | 61 | 43,3 |
| 2 | 733 | 16,7 | 27,7 | 298 | 64 | 44,6 |
| 3 | 380 | 12,0 | 26,2 | 365 | 66 | 43,6 |
| 4 | 753 | 18,2 | 30,7 | 341 | 63 | 42,8 |
| 5 | 424 | 13,8 | 33,6 | 373 | 60 | 39,9 |

Beispiel 6 bis 8

Sternförmige Styrol-Butadien-Blockcopolymere der Strukturen I und II wurden durch sequentielle anionische Polymerisation von Styrol und Butadien in Cylohexan als Lösungsmittel bei 60 bis 90°C und anschließender Kopplung mit epoxidiertem Leinsamenöl (Edenol B 316 der Fa. Henkel) erhalten.

```
Struktur I:        1x     Sa – Sb – B/S –      X

                   3,5x        Sb – B/S –       X
```

```
Struktur II:       1x     Sa – Sb – B/S – Sc –   X

                   3,5x        Sb – B/S – Sc –    X
```

Der in der Beschreibung als $S_1$ bezeichnete Block entspricht $S_b$, $S_2$ wird aus $S_a$ - $S_b$ gebildet und $S_3$ entspricht $S_c$.

X steht für den Rest des Kopplungsmittels

Hierzu wurde in einem 10-1-Rührreaktor mit sec.-Butyllithium austitriertes Cyclohexan und sec.-Butyllithium vorgelegt und die zur Herstellung des Blocks $S_a$ benötigte Menge Styrol (Styrol I) zudosiert. Anschließend wurde erneut mit sec.-Butyllithium (sec.-BuLi II) initiiert und die entsprechende Menge Styrol (Styrol II) für die Blöcke $S_b$ zudosiert. Nachdem alles Styrol verbraucht worden war, wurde Kaliumtetrahydrolinaloolat (Li:K = 20:1) als Randomizer zugegeben und die Blöcke (B/S) durch Zugabe einer Mischung aus Styrol (Styrol III) und Butadien angefügt. Im Falle der Struktur II wurde ein weiterer Styrolblock $S_c$ (Styrol IV) anpolymerisiert. Anschließend wurden die erhaltenen Blockcopolymere mit Edenol B 316 gekoppelt. Die Dosierung der Einsatzstoffe ist in Tabelle 3 und die Zusammensetzung der Blöcke und physikalische und mechanische Eigenschaften der Blockcopolymeren sind in Tabelle 4 zusammengestellt.

Tabelle 3: Dosierung der Einsatzstoffe für die Beispiele 6 bis 8

| | Block | Beispiel 6 | Beispiel 7 | Beispiel 8 |
|---|---|---|---|---|
| Cyclohexan | | 3733 g | 3733 g | 3733 g |
| sec BuLi I (1,55 m) | | 5,1 ml | 5,1 ml | 4,66 ml |
| Styrol I | $S_a$ | 635,2 g | 635,2 g | 616,3 g |
| sec BuLi II (1,55 m) | $S_b$ | 17,93 ml | 17,93 ml | 16,37 ml |
| Styrol II | $S_b$ | 420,8 g | 420,8 g | 371,4 g |
| K-THL (0,358 m in Cyclohexan) | | 5,42 ml | 5,42 ml | 4,97 ml |
| Butadien | B/S | 362,7 g | 272 g | 273,9 g |
| Styrol III | B/S | 181.3 g | 272 g | 137 g |
| Styrol IV | $S_c$ | | | 205,3 g |
| Edenol | | 5,58 ml | 5,58 ml | 5,10 ml |

Tabelle 4: Physikalische und mechanische Eigenschaften der sternförmigen Styrol-Butadien-Blockcopolymeren

| Beispiel | 6 | 7 | 8 |
|---|---|---|---|
| Struktur | I | I | II |
| $M(S_a)$ | 80 000 | 80 000 | 87 600 |
| $M(S_b)$ | 11 852 | 11 777 | 11 740 |
| M(B/S) | 12698 | 15 225 | 13 000 |
| $M(S_c)$ | - | - | 6 490 |
| Massenverhältnis Styrol : Butadien im Block (B/S) | 1:2 | 1:1 | 1:2 |
| Anteil Butadien in Gew.-% bezogen auf Gesamtpolymer | 20 | 17 | 17,1 |
| Anteil Weichblock (B/S) in Gew.-% bezogen auf Gesamtpolymer | 30 | 34 | 25,65 |
| 1,2-Vinylgehalt (%) FT-IR | 15,9 | 19,5 | 7,2 |
| Tg (°C, DSC) | -54 | -22 | -66 |
| MVI (200°C/5kg) | 9,7 | 11,2 | 5,3 |
| Vicat-Temperatur A (°C) | 83,0 | 79,6 | 83,5 |
| Shore-Härte A/D (°C) | | | 96,9 / 71,6 |
| E-Modul (MPa) | 399 | 729 | 1294 |
| Streckspannung (MPa) | 15,8 | 22,3 | 25,6 |
| Reißspannung (MPa) | 27,2 | 33,1 | 23,2 |
| Reißdehnung (%) | 304 | 300 | 297 |

Beispiel 9

Anlalog den Beispielen 1 bis 5 wurde ein lineares Styrol-Butadien-Blockcopolymer der Struktur $S_1$-(B/S)$_1$-(B/S)$_2$-$S_2$ durch sequentielle anionische Polymerisation von Styrol und Butadien hergestellt. Anstelle von Kaliumtetrahydrolinaloolat wurde Kaliumtertiäramylat (KTA) als Randomizer verwendet. Das molare Verhältnis von Lithium/Kalium betrug 38:1.

Eine Mischung aus 4786 ml Cyclohexan und 1 ml 1,1-Diphenylethylen wurde bei 50°C mit 1,4 molarem sec-Butyllithium bis zur beginnenden Rotfärbung austitriert und vorgelegt. Anschließend wurden die folgenden Einsatzstoffe in vier Schritten zugegeben. Nach jeder Zugabe wurde bei 65°C bis zum vollständigen Umsatz polymeriert. Abschließend wurde mit 1,70 ml Isopropanol terminiert, mit 7,3 ml Ameisensäure angesäuert und 64 g Irganox 3052 und 102 g Trisnonylphenylphosphit (TNPP) zur Stabilisierung zugesetzt.

Das erhaltene Blockcopolymer wurde auf einem Zweiwellenextruder ZSK 25 entgast.

Zugabe 1

211 ml (192 g) Styrol

10,4 ml sec-Butyllithium (1,4 molar in Cyclohexan/n-Hexan 90/10) Kaliumtertiäramylat (KTA) 1,07 ml (0,338 molar in Cyclohexan)

Zugabe 2

Gleichzeitige Zugabe von 335 ml Butadien (219 g) und 146 ml Styrol (133 g)

Zugabe 3

Gleichzeitige Zugabe von 276 ml Butadien (181 g) und 276 ml Styrol (251 g)

Zugabe 4

Zugabe von 686 ml (624 g) Styrol

Beispiel 10

Beispiel 9 wurde wiederholt mit dem Unterschied, daß als Randomizer 0,968 ml KTA eingesetzt wurden. (Li: K = 42:1)

Beispiel 11

Beispiel 9 wurde wiederholt mit dem Unterschied, daß als Randomizer 3,62 ml einer 0,1 molaren Lösung von Kaliumtetrahydrolinaloolat in Cyclohexan eingesetzt wurden.

Tabelle 5: Analytische und Mechanische Daten an gespritzten Probekörpern der Beispiele 9 bis 11:

| | Beispiel 9 | Beispiel 10 | Beispiel 11 |
|---|---|---|---|
| $^1$H-NMR: Anteil an 1,2-Addition bei Butadien: | 15,1 | 13,7 | 12,7 |
| DSC: Glasübergangstemperaturen [°C] | -55/+90 | -55/+90 | -55/+90 |
| Zugversuch: E-Modul [MPa] | 1175 | 1374 | 1170 |
| Zugversuch: Streckspannung [MPa] | 18,4 | 21,9 | 18,2 |
| Zugversuch: Reißdehnung [%] | 284 | 288 | 290 |
| Vicat ST B [°C] | 36,7 | 40,7 | 36,5 |

Beispiele 12 bis 19

$$\text{Struktur Ib} \quad 1x \quad S_a-S_b-(B/S)_1-(B/S)_2$$
$$3,5x \quad S_b-(B/S)_1-(B/S)_2$$

$$\text{Struktur IIb} \quad 1x \quad S_a-S_b-(B/S)_1-(B/S)_2-S_c$$
$$3,5x \quad S_b-(B/S)_1-(B/S)_2-S_c$$

$$\text{Struktur III} \quad 1x \quad S_a-S_b-(B/S)_1-(B/S)_2-(B/S)_3-S_c$$
$$1,6x \quad S_b-(B/S)_1-(B/S)_2-(B/S)_3-S_c$$

Der in der Beschreibung als $S_1$ bezeichnete Block entspricht $S_b$, $S_2$ wir aus $S_a$ und $S_b$ gebildet und $S_3$ entspricht $S_c$.

Analog der Beispiele 6 bis 8 wurden sternförmige Styrol-Butadien-Blockcopolymere der Strukturen I, Ib, IIb und III durch sequentielle anionische Polymerisation von Styrol und Butadien mit den in Tabelle 6 angegebenen Mengen und Dosierabfolge erhalten. Die erhaltenen Blockcopolymere wurden anschließend mit Edenol B 316 (tetrafunktionell) bzw. Diethylcarbonat (trifunktionell) gekoppelt. Die physikalischen und mechanischen Eigenschaften sind in Tabelle 7 zusammengestellt.

Beispiele 20 bis 27

Die Blockcopolymeren der Beispiele 12 bis 20 wurden jeweils mit Standardpolystyrol (PS 158K der BASF) im Gewichtsverhältnis 30/70 (Blockcopolymer/PS) gemischt.

Tabelle 6 Mengen und Reihenfolge der Dosierungen der Beispiele 12 bis 19

| | Block | Einheit | Beispiel | | | | | | | |
|---|---|---|---|---|---|---|---|---|---|---|
| | | | 12 | 13 | 14 | 15 | 16 | 17 | 18 | 19 |
| Cyclohexan | | 1 | 643 | 643 | 643 | 643 | 643 | 643 | 643 | 643 |
| Styrol I | $S_a$ | kg | 76,2 | 76,2 | 76,2 | 57,2 | 45,8 | 76,2 | 54,2 | 54,2 |
| sec-Buli I 1.35 m | | 1 | 0,788 | 0,788 | 0,788 | 0,788 | 0,788 | 1,050 | 0,900 | 0,900 |
| K-THL (3%) | | 1 | 1,057 | 1,057 | 1,057 | 1,057 | 1,057 | 1,096 | 0,698 | 0,442 |
| sec-Buli II 1.35m | | 1 | 2,757 | 2,757 | 2,757 | 2,757 | 2,757 | 2,625 | 1,440 | 1,440 |
| Styrol II | $S_b$ | kg | 46,3 | 32,4 | 32,4 | 51,4 | 62,9 | 32,4 | 40,4 | 40,4 |
| Butadien I | $(B/S)_1$ | kg | 52,0 | 10,0 | 10 | 10 | 10 | 10 | 18,0 | 18,0 |
| Styrol III | $(B/S)_1$ | kg | 25,4 | 13,9 | 13,9 | 13,9 | 13,9 | 13,9 | 17,1 | 17,1 |
| Butadien II | $(B/S)_2$ | kg | | 42,0 | 42,0 | 42,0 | 42,0 | 42,0 | 18,0 | 18,0 |
| Styrol IV | $(B/S)_2$ | kg | | 25,4 | 20,3 | 20,3 | 20,3 | 20,3 | 17,1 | 17,1 |
| Butadien III | $(B/S)_3$ | kg | | | | | | | 18,0 | 18,0 |
| Styrol V | $(B/S)_3$ or $S_c$ | kg | | | 5,1 | 5,1 | 5,1 | 5,1 | 10,8 | 10,8 |
| Styrol VI | $S_c$ | kg | | | | | | | 6,4 | 6,4 |
| Edenol B316 | | ml | | 531 | 531 | 531 | 531 | 551 | | |

(fortgesetzt)

| | Block | Einheit | Beispiel | | | | | | | |
|---|---|---|---|---|---|---|---|---|---|---|
| | | | 12 | 13 | 14 | 15 | 16 | 17 | 18 | 19 |
| Diethylcarbonat | | ml | | | | | | | 128 | 128 |
| Struktur | | | I | Ib | IIb | IIb | IIb | IIb | III | III |

Tabelle 7: Physikalische and mechanische Eigenschaften der sternförmigen Styrol-Butadien-Blockcopolymeren der Beispiele 12 bis 19

| Beispiel | Vicat B [°C] | Shorehärte D [°C] | E-Modul [MPa] | Streckspannung [MPa] | Reißdehnung [%] |
|---|---|---|---|---|---|
| 12 | 36,2 | 57 | 255 | 12,5 | 368 |
| 13 | 31, 6 | 53 | 208 | 9,2 | 360 |
| 14 | 31,8 | 55 | 343 | 10,7 | 360 |
| 15 | 35,6 | 57 | 231 | 9,4 | 437 |
| 16 | 37,8 | 60 | 395 | 12,3 | 445 |
| 17 | 32,9 | 55 | 180 | 9, 8 | 399 |
| 18 | 32,1 | 53 | 114 | 7,0 | 494 |
| 19 | 33,2 | 53 | 117 | 7,0 | 496 |

Tabelle 8: Physikalische und mechanische Eigenschaften der Blends aus Blockcopolymeren der Beispiele 12 bis 19 mit GPPS

| Beispiel | Blockcopolymer aus Beispiel | Vicat B [°C] | Shorehärte D [°C] | E-Modul [MPa] | Streckspannung [MPa] | Reißdehnung [%] |
|---|---|---|---|---|---|---|
| 20 | 12 | 76,3 | 75 | 1183 | 33,7 | 9,9 |
| 21 | 13 | 71,4 | 80 | 1236 | 34,2 | 11 |
| 22 | 14 | 63,7 | 79 | 1421 | 31,9 | 2,6 |
| 23 | 15 | 80,4 | 77 | 1169 | 28,5 | 49 |
| 24 | 16 | 86,9 | 77 | 1830 | 37,3 | 17 |
| 25 | 17 | 79,9 | 77 | 855 | 31,7 | 35 |
| 26 | 18 | 76,1 | 75 | 1467 | 27,6 | 49 |
| 27 | 19 | 78,7 | 74 | 1044 | 27,9 | 63 |

**Patentansprüche**

1. Blockcopolymere, enthaltend mindestens zwei Hartblöcke $S_1$ und $S_2$ aus vinylaromatischen Monomeren und mindestens einen dazwischenliegenden, statistischen weichblock B/S aus vinylaromatischen Monomeren und Dienen und einem 1,2-vinylgehalt im Weichblock B/S unter 20 %, **dadurch gekennzeichnet, daß** der Anteil der Hartblöcke über 40 Gew.-%, bezogen auf das gesamte Blockcopolymer, beträgt und das Molekulargewicht von $S_1$ im Bereich von 5000 bis 30000 g/mol liegt und das Molekulargewicht von $S_2$ größer als 35000 g/mol beträgt.

2. Blockcopolymere nach Anspruch 1, **dadurch gekennzeichnet, daß** die Blockcopolymeren keinen Hamopolymerenblock B aus Dienen enthalten.

3. Blockcopolymere nach Anspruch 1 oder 2, **dadurch gekennzeichnet, dass** das Molekulargewicht von $S_1$ im Bereich

von 10000 bis 20000 g/mol und das Molekulargewicht von $S_2$ im Bereich von 50000 bis 150000 g/mol liegt.

**4.** Blockcopolymere nach einem der Ansprüche 1 bis 3, **dadurch gekennzeichnet, daß** sich mindestens zwei statistische Weichblöcke $(B/S)_1$ und $(B/S)_2$ mit unterschiedlichen relativen Anteilen an vinylaromatischen Monomeren zwischen den Hartblöcken $S_1$ und $S_2$ befinden.

**5.** Blockcopolymere nach einem der Ansprüche 1 bis 3, **dadurch gekennzeichnet, daß** die Blockcopolymeren eine sternförmige Struktur mit mindestens einem Sternast der Blockfolge $S_1$-(B/S) und einem Sternast der Blockfolge $S_2$-(B/S) besitzen.

**6.** Blockcopolymere nach einem der Ansprüche 1 bis 3, **dadurch gekennzeichnet, daß** die Blockcopolymeren eine sternförmige Struktur mit mindestens einem Sternast der Blockfolge $S_1$-(B/S)-$S_3$ und mindestens einem Sternast der Blockfolge $S_2$-(B/S)-$S_3$ besitzen, wobei $S_3$ für einen weiteren Hartblock aus vinylaromatischen Monomeren steht.

**7.** Blockcopolymere nach einem der Ansprüche 1 bis 4, **dadurch gekennzeichnet, daß** die Blockcopolymeren eine sternförmige Struktur mit mindestens einem Sternast der Blockfolge $S_1$-$(B/S)_1$-$(B/S)_2$ und mindestens einem Sternast der Blockfolge $S_2$-$(B/S)_1$-$(B/S)_2$ besitzen und das molare Verhältnis von vinylaromatischem Monomer zu Dien S/B im Block $(B/S)_1$ im Bereich von 0,5 bis 2 und im Block $(B/S)_2$ unter 0,5 liegt.

**8.** Blockcopolymere nach einem der Ansprüche 1 bis 4, **dadurch gekennzeichnet, daß** die Blockcopolymere eine sternförmige Struktur mit mindestens einem Sternast der Blockfolge $S_1$-$(B/S)_1$-$(B/S)_2$-$S_3$ und mindestens einem Sternast der Blockfolge $S_2$-$(B/S)_1$-$(B/S)_2$-$S_3$ besitzen und das molare Verhältnis von vinylaromatischem Monomer zu Dien S/B im Block $(B/S)_1$ im Bereich von 0,5 bis 2 und im Block $(B/S)_2$ unter 0,5 liegt, wobei $S_3$ für einen weiteren Hartblock aus vinylaromatischen Monomeren steht.

**9.** Blockcopolymere nach Anspruch 6 oder 8, **dadurch gekennzeichnet, daß** das Molekulargewicht von $S_3$ im Bereich von 500 bis 5000 g/mol liegt.

**10.** Blockcopolymere nach einem der Ansprüche 1 bis 4, **dadurch gekennzeichnet, daß** die Blockcopolymeren eine lineare Struktur $S_1$-$(B/S)_1$-$(B/S)_2$-$S_2$ besitzen und das molare Verhältnis von vinylaromatischem Monomer zu Dien S/B im Block $(B/S)_1$ unter 0,25 und im Block $(B/S)_2$ im Bereich von 0,5 bis 2 liegt.

**11.** Polymermischungen aus Blockcopolymeren nach einem der Ansprüche 1 bis 10 und weiteren Styrolpolymeren.

**12.** Verfahren zur Herstellung von Blockcopolymeren gemäß einem der Ansprüche 1 bis 10, **dadurch gekennzeichnet, daß**, die Blockcopolymeren durch sequentielle anionische Polymerisation gebildet werden, wobei mindestens die Polymerisation des Weichblockes (B/S) in Gegenwart eines Kaliumsalzes erfolgt.

**13.** Verfahren zur Herstellung von Blockcopolymeren nach Anspruch 12, **dadurch gekennzeichnet, daß** das molare Verhältnis von anionischem Polymerisationsinitiator zu Kaliumsalz im Bereich von 10 : 1 bis 100 : 1 gewählt wird.

**14.** Verfahren zur Herstellung von Blockcopolymeren nach Anspruch 12 oder 13, **dadurch gekennzeichnet, daß** man als Kaliumsalz ein Kaliumalkoholat eines tertiären Alkohols mit mindestens 5 Kohlenstoffatomen einsetzt.

**15.** Verfahren zur Herstellung von Blockcopolymeren nach einem der Ansprüche 12 bis 14, **dadurch gekennzeichnet, daß** man als Kaliumsalz ein Kalium-2-methyl-butanolat, Kalium-2,2-dimethyl-1-propanolat, Kalium-2,3-dimethyl-3-pentanolat, Kalium-3,7-dimethyl-3-oktanolat oder Kalium-3-ethyl-3-pentanolat einsetzt.

**16.** Verfahren zur Herstellung von Blockcopolymeren gemäß einem der Ansprüche 5 bis 8 durch sequentielle anionische Polymerisation, wobei zweimal ein Polymerisationsinitiator $I_1$ und $I_2$ gemeinsam mit vinylaromatischem Monomer zugegeben wird und das molare Verhältnis $I_2/I_1$ im Bereich von 4/1 bis 1/1 liegt, und wobei mindestens die Polymerisation der Weichblöcke (B/S) in Gegenwart eines Kaliumsalzes erfolgt und nach Beendigung der Polymerisation die lebenden Polymerketten durch Zugabe eines mehrfunktionellen Kopplungsmittels sternförmig verknüpft werden.

**17.** Verwendung der Blockcopolymeren oder Polymermischungen gemäß Anspruch 1 bis 11 zur Herstellung von Fasern, Folien und Formkörpern.

**EP 1 171 497 B1**

**Claims**

1. A block copolymer comprising at least two hard blocks $S_1$ and $S_2$ made from vinylaromatic monomers and, between these, at least one random soft block B/S made from vinylaromatic monomers and from dienes and a 1,2-vinyl content in the soft block B/S of less than 20%, wherein the proportion of the hard blocks is above 40% by weight, based on the total block copolymer, and the molar mass of $s_1$ is from 5 000 to 30 000 g/mol, and the molar mass of $s_2$ is above 35 000 g/mol.

2. The block copolymer according to claim 1, in which there is no homopolymer block B made from dienes.

3. The block copolymer according to claim 1 or 2, wherein the molar mass of $S_1$ is from 10 000 to 20 000 g/mol and the molar mass of $S_2$ is from 50 000 to 150 000 g/mol.

4. The block copolymer according to any one of claims 1 to 3, wherein there are at least two random soft blocks $(B/S)_1$ and $(B/S)_2$ having different relative proportions of vinylaromatic monomers between the hard blocks $S_1$ and $S_2$.

5. The block copolymer according to any one of claims 1 to 3, which has a star-shaped structure having at least one arm of the star with the block sequence $S_1$-(B/S) and one arm of the star with the block sequence $S_2$-(B/S).

6. The block copolymer according to any one of claims 1 to 3 which has a star-shaped structure where at least one arm of the star has the block sequence $S_1$-(B/S)-$S_3$ and at least one arm of the star has the block sequence $S_2$-(B/S)-$S_3$, where $S_3$ is another hard block made from vinylaromatic monomers.

7. The block copolymer according to any one of claims 1 to 4 which has a star-shaped structure where at least one arm of the star has the block sequence $S_1$-$(B/S)_1$-$(B/S)_2$ and at least one arm of the star has the block sequence $S_2$-$(B/S)_1$-$(B/S)_2$, and the molar ratio of vinylaromatic monomer to diene S/B in the block $(B/S)_1$ is from 0.5 to 2, and in the block $(B/S)_2$ is less than 0.5.

8. A block copolymer according to any one of claims 1 to 4, which has a star-shaped structure where at least one arm of the star has the block sequence $S_1$-$(B/S)_1$-$(B/S)_2$-$S_3$ and at least one arm of the star has the block sequence $S_2$-$(B/S)_1$-$(B/S)_2$-$S_3$, and the molar ratio of vinylaromatic monomer to diene S/B in the block $(B/S)_1$ is from 0.5 to 2, and in the block $(B/S)_2$ is less than 0.5, where $S_3$ is another hardblock made from vinylaromatic monomers.

9. The block polymer according to claim 6 or 8, wherein the molar mass of $S_3$ is from 500 to 5 000 g/mol.

10. The block copolymer according to any one of claims 1 to 4, which has a linear structure $S_1$-$(B/S)_1$-$(B/S)_2$-$S_2$, and wherein the molar ratio of vinylaromatic monomer to diene S/B in the block $(B/S)_1$ is less than 0.25 and in the block $(B/S)_2$ is from 0.5 to 2.

11. The polymer mixture made from block copolymers according to any one of claims 1 to 10 and from other styrene polymers.

12. The process for preparing block copolymers according to any one of claims 1 to 10, which comprises forming the block copolymers by sequential anionic polymerization, where at least the polymerization of the soft block (B/S) takes place in the presence of a potassium salt.

13. The process for preparing block copolymers according to claim 12, wherein the molar ratio selected of anionic polymerization initiator to potassium salt is from 10:1 to 100:1.

14. The process for preparing block copolymers according to claim 12 or 13, wherein the potassium salt used comprises a potassium alcoholate of a tertiary alcohol having at least 5 carbon atoms.

15. The process for preparing block copolymers according to any one of claims 12 to 14, wherein the potassium salt used comprises a potassium 2-methylbutanolate, potassium 2,2-dimethyl-1-propanolate, potassium 2,3-dimethyl-3-pentanolate, potassium 3,7-dimethyl-3-octanolate or potassium 3-ethyl-3-pentanolate.

16. A process for preparation of block copolymers according to any of claims 5 to 8 via sequential anionic polymerization, where on two occasions a polymerization initiator $I_1$ and $I_2$ is added together with vinylaromatic monomer, and the

11

molar $I_2/I_1$ ratio is in the range from 4/1 to 1/1, and where at least the polymerization of the soft blocks (B/S) takes place in the presence of a potassium salt, and once the polymerization reaction has been completed the living polymer chains are linked in the shape of a star via addition of a polyfunctional coupling agent.

**17.** The use of the block copolymers or polymer mixtures according to any one of claims 1 to 11 for producing fibers, films, or moldings.

**Revendications**

**1.** Copolymères blocs contenant au moins deux blocs durs $S_1$ et $S_2$ à base de monomères vinyl-aromatiques et au moins un bloc mou statistique B/S situé entre eux et à base de monomères vinyl-aromatiques et de diènes et avec une teneur 1,2-vinylique dans le bloc mou B/S inférieure à 20 %, **caractérisés en ce que** la fraction des blocs durs est supérieure à 40 % en poids par rapport au copolymère bloc global et le poids moléculaire de $S_1$ est de l'ordre de 5 000 à 30 000 g/mole et le poids moléculaire de $S_2$ est supérieur à 35 000 g/mole.

**2.** Copolymères blocs suivant la revendication 1, **caractérisés en ce que** les copolymères blocs ne contiennent pas de bloc homopolymère B à base de diènes.

**3.** Copolymères blocs suivant la revendication 1 ou 2, **caractérisés en ce que** le poids moléculaire de $S_1$ est de l'ordre de 10 000 à 20 000 g/mole et le poids moléculaire de $S_2$ de l'ordre de 50 000 à 150 000 g/mole.

**4.** Copolymères blocs suivant l'une des revendications 1 à 3, **caractérisés en ce qu'**au moins deux blocs mous statistiques $(B/S)_1$ et $(B/S)_2$ ayant des fractions relatives différentes en monomères vinyl-aromatiques se trouvent entre les blocs durs $S_1$ et $S_2$.

**5.** Copolymères blocs suivant l'une des revendications 1 à 3, **caractérisés en ce que** les copolymères blocs possèdent une structure en forme d'étoile avec au moins une branche d'étoile ayant la succession de blocs $S_1$-(B/S) et une branche d'étoile ayant la succession de blocs $S_2$-(B/S).

**6.** Copolymères blocs suivant l'une des revendications 1 à 3, **caractérisés en ce que** les copolymères blocs possèdent une structure en forme d'étoile avec au moins une branche d'étoile ayant la succession de blocs $S_1$-(B/S)-$S_3$ et au moins une branche d'étoile ayant la succession de blocs $S_2$-(B/S)-$S_3$, $S_3$ représentant un autre bloc dur en monomères vinyl-aromatiques.

**7.** Copolymères blocs suivant l'une des revendications 1 à 4, **caractérisés en ce que** les copolymères blocs possèdent une structure en forme d'étoile avec au moins une branche d'étoile ayant la succession de blocs $S_1$-(B/S)$_1$-(B/S)$_2$ et au moins une branche d'étoile ayant la succession de blocs $S_2$- (B/S)$_1$- (B/S)$_2$, et le rapport molaire entre monomère vinyl-aromatique et diène S/B dans le bloc (B/S)$_1$ est de l'ordre de 0,5 à 2 et dans le bloc (B/S)$_2$ inférieur à 0,5.

**8.** Copolymères blocs suivant l'une des revendications 1 à 4, **caractérisés en ce que** les copolymères blocs possèdent une structure en forme d'étoile avec au moins une branche d'étoile ayant la succession de blocs $S_1$-(B/S)$_1$-(B/S)$_2$-$S_3$ et au moins une branche d'étoile ayant la succession de blocs $S_2$-(B/S)$_1$-(B/S)$_2$-$S_3$, et le rapport molaire entre monomère vinyl-aromatique et diène S/B dans le bloc (B/S)$_1$ est de l'ordre de 0,5 à 2 et dans le bloc (B/S)$_2$ inférieur à 0,5, $S_3$ représentant un autre bloc dur en monomères vinyl-aromatiques.

**9.** Copolymères blocs suivant la revendication 6 ou 8, **caractérisés en ce que** le poids moléculaire de $S_3$ est de l'ordre de 500 à 5 000 g/mole.

**10.** Copolymères blocs suivant l'une des revendications 1 à 4, **caractérisés en ce que** les copolymères blocs possèdent une structure linéaire $S_1$-(B/S)$_1$-(B/S)$_2$-$S_2$ et le rapport molaire entre monomère vinyl-aromatique et diène S/B dans le bloc (B/S)$_1$ est inférieur à 0,25 et dans le bloc (B/S)$_2$ de l'ordre de 0,5 à 2.

**11.** Mélanges polymères de copolymères blocs suivant l'une des revendications 1 à 10 et d'autres polymères de styrène.

**12.** Procédé de préparation de copolymères blocs suivant l'une des revendications 1 à 10, **caractérisé en ce que** les copolymères blocs sont formés par une polymérisation anionique séquentielle, au moins la polymérisation du bloc mou (B/S) ayant lieu en présence d'un sel de potassium.

**13.** Procédé de préparation de copolymères blocs suivant la revendication 12, **caractérisé en ce que** le rapport molaire entre l'amorceur de polymérisation anionique et le sel de potassium est choisi dans la gamme de 10/1 à 100/1.

**14.** Procédé de préparation de copolymères blocs suivant la revendication 12 ou 13, **caractérisé en ce que**, comme sel de potassium, on met en oeuvre un alcoolate de potassium d'un alcool tertiaire comportant au moins 5 atomes de carbone.

**15.** Procédé de préparation de copolymères blocs suivant l'une des revendications 12 à 14, **caractérisé en ce que**, comme sel de potassium, on met en oeuvre du 2-méthyl-butanolate de potassium, du 2,2-diméthyl-1-propanolate de potassium, du 2,3-diméthyl-3-pentanolate de potassium, du 3,7-diméthyl-3-octanolate de potassium ou du 3-éthyl-3-pentanolate de potassium.

**16.** Procédé de préparation de copolymères blocs suivant l'une des revendications 5 à 8, par polymérisation anionique séquentielle, dans lequel à deux reprises un amorceur de polymérisation $I_1$ et $I_2$ est ajouté conjointement à du monomère vinyl-aromatique et le rapport molaire $I_2/I_1$ est de l'ordre de 4/1 à 1/1, et dans lequel au moins la polymérisation des blocs mous (B/S) a lieu en présence d'un sel de potassium et, après achèvement de la polymérisation, les chaînes polymères vivantes sont nouées en forme d'étoile par addition d'un agent de couplage plurifonctionnel.

**17.** Utilisation des copolymères blocs ou mélanges polymères suivant les revendications 1 à 11, pour la préparation de fibres, de feuilles et de corps façonnés.